# EUROPÄISCHE PATENTSCHRIFT

(11) **EP 4 133 942 B1**
(45) Veröffentlichungstag und Bekanntmachung des Hinweises auf die Patenterteilung: **08.10.2025**
(21) Anmeldenummer: 21190588.0
(22) Anmeldetag: 10.08.2021
(51) Int. Cl.: A22C 11/10

(54) **VERDRÄNGERELEMENTEPAAR**
DISPLACEMENT ELEMENT PAIR
PAIRE D'ÉLÉMENTS DÉPLACEURS

(43) Veröffentlichungstag der Anmeldung: 15.02.2023
(60) Teilanmeldung: 25178827.9
(73) Patentinhaber: Albert Handtmann Maschinenfabrik GmbH & Co. KG, 88400 Biberach (DE)
(72) Erfinder: SCHLIEßER, Gerhard, 88489 Wain (DE); SCHMID, Alwin, 88416 Steinhausen/Rottum (DE); RECHSTEINER, Jürgen, 88436 Eberhardzell (DE)
(74) Vertreter: Grünecker Patent- und Rechtsanwälte PartG mbB

(56) Entgegenhaltungen:
- EP-A1- 4 088 581
- WO-A1-2017/081648
- US-A- 3 264 679
- US-A- 4 418 447
- US-A- 5 133 685
- US-A- 5 709 600

## Beschreibung

Die Erfindung betrifft eine Vorrichtung zum Abteilen eines Wurststrangs mit einem Verdrängerelementepaar gemäß Anspruch 1.

Die US 5 133 685 A beschreibt bereits eine Vorrichtung zum Abteilen eines Wurststrangs mit Verdrängerelementen mit jeweils zwei Flügelabschnitten. In diesem Dokument greifen die Verdrängerelemente beim Abteilen verschränkt ineinander ein. Die Flügelabschnitte verlaufen unter einem Winkel zueinander. Dieses Dokument zeigt nicht, dass zumindest im Bereich eines sich insbesondere V-förmig erweiternden Ausschnitts der Abstand zwischen einer Ebene, in der die Verdrängerkante eines ersten Flügelabschnitts liegt und einer Ebene, in der die Verdrängerkante des ersten Flügelabschnitts des gegenüberliegenden Verdrängerelements liegt und der Abstand zwischen einer Ebene, in der die Verdrängerkante des zweiten Flügelabschnitts und einer Ebene, in der die Verdrängerkante des zweiten Flügelabschnitts des gegenüberliegenden Verdrängerelements liegt, in einem Bereich >=dem Maß der Verdrängerflügeldicke und <= dem Maß der Verdrängerflügeldicke +4 mm liegt. Die nachveröffentlichte EP 4 088 581 A1 zeigt dieses Merkmal ebenfalls nicht.

Zum Herstellen von Würsten wird pastöse Masse z.B. über ein Füllrohr in eine Wursthülle gefüllt, wodurch ein gefüllter Wurststrang erzeugt wird. Um einen solchen "endlos" gefüllten Wurststrang beim Füllen in gleich lange Portionen abzuteilen, wird mit sogenannten gegenüberliegenden Verdrängerelementen die pastöse Masse im Produktstrang in vorgegebenen Abständen verdrängt, insbesondere eine Einschnürstelle erzeugt. Der zu befüllende Wurststrang kann dazu z.B. über eine Abdreheinheit um seine Längsachse verdrillt werden, wobei dann an der Einschnürstelle eine Abdrehstelle einspringt und der Wurststrang somit unterteilt ist. Bei der Produktion mit Verdrängerelementen, wie sie derzeit am Markt verfügbar sind, bilden sich zwischen den Verdrängerelementen beim Einschnüren Falten, die das Verdrillen der Einschnürstelle und das Einspringen der Abdrehstelle zwar nicht verhindern, aber dennoch verzögern können, d.h., dass die Abdrehstelle später einspringt, d.h. in Transportrichtung betrachtet, erst weiter hinten einspringt. Das bedeutet, dass die Erzeugung der Abdrehstelle, bzw. Abteilstelle länger dauert und die Produkthülle stärker belastet wird. Empfindliche Wursthüllen können beim Verdrängen beschädigt werden, wodurch die Produktion stark beeinträchtigt wird.

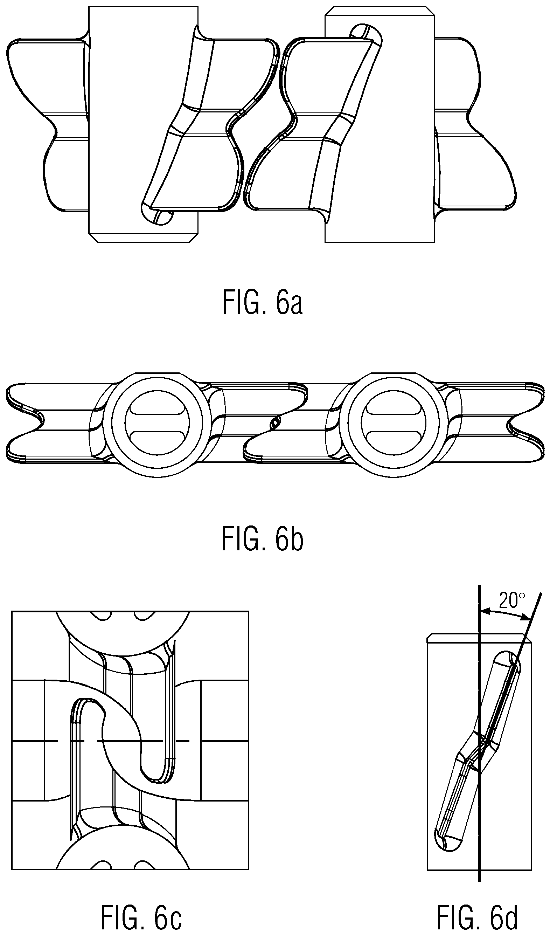

Figur 6a zeigt in perspektivischer Darstellung zwei gegenüberliegende Verdrängerelemente gemäß dem Stand der Technik, die um ihre jeweilige Achse A in entgegengesetzter Richtung gedreht werden. Der Wurststrang bewegt sich zwischen den Verdrängerelementen hindurch. Wie aus Figur 6a und 6b hervorgeht, weist jedes Verdrängerelement mindestens einen Flügel mit einem oberen Flügelabschnitt und einem unteren Flügelabschnitt auf, die, wie in Figur 6b gezeigt ist, in einer Abteilposition verschränkt ineinandergreifen. Wie aus der Figur 6b und 6d hervorgeht, verlaufen die gegenüberliegenden oberen Flügelabschnitte und die gegenüberliegenden unteren Flügelabschnitte dabei jeweils unter einem Winkel von z.B. 2 mal 20 °, zueinander. Dadurch entsteht, wie aus Figur 6c hervorgeht, jeweils zwischen den beiden oberen und auch den beiden unteren Flächen der Flügelabschnitte ein Bereich, in dem sich der Wurststrang faltenartig ausbreitet, wodurch das Verdrillen der Wursthülle gebremst wird. Die entsprechenden Flügelabschnitte sind deshalb zueinander angestellt, damit die Verdrängerelemente möglichst nah zueinander positioniert werden können und sich die Flügel trotzdem aneinander ohne Kollision vorbei bewegen können.

Hiervon ausgehend liegt der vorliegenden Erfindung die Aufgabe zugrunde, eine verbesserte Vorrichtung zum Abteilen eines Wurststrangs bereitzustellen, die ermöglichen, dass die Abteilstelle schnell und schonend einspringen kann.

Erfindungsgemäß wird diese Aufgabe durch die Merkmale des Anspruchs 1 gelöst.

Gemäß der vorliegenden Erfindung umfasst die Vorrichtung ein Verdrängerelementepaar zum Abteilen eines zwischen den Verdrängerelementen transportierten Wurststrangs in Einzelwürste vorgesehen. Jedes Verdrängerelement weist mindestens einen Flügel auf, der einen ersten Flügelabschnitt und einen zweiten Flügelabschnitt ausweist, zwischen denen ein sich nach außen erweiternder, insbesondere V-förmiger Ausschnitt ausgebildet ist. Sowohl der erste, also z.B. obere als auch der zweite, z.B. untere Flügelabschnitt weisen jeweils eine zur Seite gewölbte Tasche oder Öffnung auf.

Die gewölbte Tasche oder Öffnung, die jeweils in einem Bereich innerhalb der Außenkontur des jeweiligen Flügelabschnitts liegen, ermöglicht, dass sich die Verdrängerelemente aneinander vorbei bewegen können, derart, dass die Flügelabschnitte während der Umdrehung nicht aneinander stoßen, weil z.B. ein erster Flügelabschnitt sich im Bereich der gewölbten Tasche des entsprechenden Flügelabschnitts des gegenüberliegenden Verdrängerelements vorbei bewegen kann, d.h. sich durch den durch die Tasche oder Öffnung geschaffenen Freiraum bewegen kann. Somit wird ermöglicht, dass in einer Abteilposition, in der der Wurststrang maximal eingeschnürt ist und sich die beiden erweiternden, insbesondere V-förmigen Ausschnitte maximal überlagern, die ersten und zweiten Flügelabschnitte der jeweiligen Verdrängerelemente im Wesentlichen parallel mit geringem Abstand zueinander angeordnet werden können, sodass eine Faltenbildung zwischen den Flächen der Flügelabschnitte verhindert werden und die Abdrehstelle schneller und schonender einspringen kann.

Gemäß einem bevorzugten Ausführungsbeispiel liegt die Verdrängerkante, d.h. die Außenkontur des ersten und zweiten Flügelabschnitts eines jeweiligen Verdrängerelements zumindest im Bereich des sich erweiternden Ausschnitts entweder a) in im Wesentlichen parallelen Ebenen oder b) in einer gemeinsamen Ebene. Wenn die Verdrängerkanten des ersten und zweiten Flügelabschnitts in parallelen Ebenen liegen, können die Flügel verschränkt ineinandergreifen, um den Wurststrang abzuteilen. Wenn die Verdrängerkanten des ersten und zweiten Flügelabschnitts in einer gemeinsamen Ebene liegen, kann das Abteilen durch parallel zueinanderstehende Flügel bewerkstelligt werden. Die Ebenen verlaufen dabei insbesondere jeweils entsprechend durch die Mitte der Flügelbreite im Bereich des sich erweiternden Abschnitts.

Durch diese Anordnung ist es möglich, dass der Abstand zwischen den Flügeln der gegenüberliegenden Verdrängerelemente in einer Abteilposition zumindest im Bereich des sich nach außen erweiternden, insbesondere V-förmigen Abschnitts, klein gehalten werden kann. Der Abstand kann dabei auch im Wesentlichen konstant sein. Die Flügelabschnitte laufen nicht wie im Stand der Technik auseinander, sodass eine Faltenbildung wirksam verhindert werden kann und der Wurststrang beim Abdrehen in kürzester Zeit verdrillt und die Abdrehstelle einspringt. Die Abteilstelle wird somit insgesamt schonender erzeugt.

In Abhängigkeit der Dicke der Flügelelemente liegt der Abstand der Ebenen voneinander vorzugsweise in folgendem Bereich: Betrag der Dicke der Flügelabschnitte + 0 mm bis 4 mm, insbesondere Betrag der Dicke + 0,1 mm bis 3 mm, insbesondere + 0,2 mm bis 1 mm. In diesem Bereich kommt es zu keinem Einklemmen und die Abdrehstelle springt schnell und vollständig ein. Hier wird die Dicke, insbesondere maximale Dicke (bei nicht konstanter Dicke) der Flügelabschnitte im sich erweiternden Ausschnitt betrachtet.

Vorteilhafterweise ist im Fall a) im ersten Flügelabschnitt eines jeweiligen Verdrängerelements die gewölbte Tasche zu einer ersten Seite nach außen gewölbt und im zweiten Flügelabschnitt die gewölbte Tasche zur gegenüberliegenden Seite gewölbt und im Fall b) die gewölbten Taschen im ersten und zweiten Flügelabschnitt zur gleichen Seite gewölbt. Somit können sich die Flügelabschnitte ohne Kollision aneinander vorbei bewegen.

Gemäß einem bevorzugten Ausführungsbeispiel können in einer Abteilposition, in der der Wurststrang maximal eingeschnürt ist und die beiden sich erweiternden Ausschnitte maximal überlagert sind, der Flügel des ersten Verdrängerelements und der Flügel des zweiten gegenüberliegenden Verdrängerelements verschränkt ineinandergreifen oder die Flügel im Wesentlichen parallel nebeneinander angeordnet sein.

Gemäß einer bevorzugten Ausführungsform können die Flügel fahnenartig an einer Halterung angeordnet sein, über die sie mit einem Drehmechanismus, der insbesondere eine Antriebswelle umfasst, verbindbar sind, um die Verdrängerelemente um eine Achse zu drehen oder umlaufend um mehrere Achsen zu bewegen. Das heißt, dass die Verdrängerelemente entweder beabstandet zueinander um z.B. ihre Mittelachse gedreht werden oder aber jeweils auf einem Transportmittel, z.B. Kette oder Transportband etc. befestigt sind und umlaufen.

Die Verdrängerelemente der Erfindung weisen, selbst wenn sie gedreht werden oder umlaufen, die gleichen Vorteile auf, die linear aufeinander zu bewegte Verdrängerelemente aufweisen, deren Flügel in der Abteilposition sehr nah zueinander angeordnet werden können. Durch die Drehbewegung oder umlaufende Bewegung kann jedoch gemäß der Erfindung die Produktionsgeschwindigkeit erhöht werden.

Die erfindungsgemäße Vorrichtung weist eine Transporteinrichtung zum Transportieren des gefüllten Wurststrangs zwischen den gegenüberliegenden Verdrängerelementen auf. Weiter weist die Vorrichtung einen Drehmechanismus auf, um die Verdrängerelemente um eine jeweilige Drehachse zu drehen oder umlaufend um mehrere Drehachsen zu bewegen.

Obwohl die Verdrängerelemente die pastöse Masse auch verdrängen können, wenn keine Abdreheinrichtung vorgesehen ist, ist eine Abdreheinrichtung zum Drehen des Wurststrangs um seine Längsachse L vorteilhaft, damit eine Abdrehstelle zwischen den einzelnen Würsten erzeugt werden kann. Bei z.B. koextrudierten Würsten, bei denen eine Wursthülle zusammen mit der pastösen Masse extrudiert wird, ist keine Abdreheinrichtung notwendig. Auch hier ist die vorliegende Erfindung vorteilhaft, da eine wohlgeformte Abteilstelle ohne schräges Abquetschen erzeugt werden kann.

Gemäß einer bevorzugten Ausführungsform sind die Verdrängerelemente derart angeordnet, dass in einer Abteilposition, in der die sich erweiternden Ausschnitte der gegenüberliegenden Verdrängerelemente maximal überlagern, die jeweiligen Verdrängerkanten des ersten Flügelabschnitts eines Verdrängerelements und des zweiten Flügelabschnitts des gegenüberliegenden Verdrängerelements zumindest im Bereich des jeweiligen sich erweiternden Ausschnitts im Wesentlichen in parallelen Ebenen liegen. Im Wesentlichen parallel bedeutet z.B. eine maximale Abweichung um 0 Grad bis ±10, insbesondere 0° bis 5° Grad, noch bevorzugter 0° bis 3°.

Dabei können die Verdrängerelemente über den Drehmechanismus um ihre Mittelachse A1 gedreht werden, wobei z.B. die Mittelachse im Wesentlichen parallel zu den Ebenen E1, E2 verläuft, in denen die Verdrängerkante der Flügelabschnitte zumindest im Bereich des sich erweiternden Ausschnitts liegt. Vorzugsweise erstreckt sich die Mittelachse, bzw. Drehachse senkrecht zur Transportrichtung T des Wurststrangs.

Gemäß einem bevorzugten Ausführungsbeispiel sind die gegenüberliegenden Verdrängerelemente jeweils an zwei um mehrere Achsen umlaufenden Transportmittel, insbesondere einer Transportkette oder einem Transportband, angeordnet. Die Drehachsen sind vorzugsweise im Wesentlichen parallel zu den Ebenen, in denen die Verdrängerkanten der ersten und zweiten Flügelabschnitte im Bereich des insbesondere V-förmigen Ausschnitts angeordnet sind. Die Drehachsen verlaufen vorzugsweise senkrecht zur Transportrichtung des Wurststrangs.

Gemäß einem weiteren Ausführungsbeispiel weist ein Verdrängerelement mehrere umlaufende Flügel auf oder aber es sind mehrere Verdrängerelemente mit einem jeweiligen Flügel auf dem jeweiligen umlaufenden Transportmittel angeordnet. So kann der Durchsatz erhöht werden.

Vorteilhafterweise sind die Verdrängerelemente mittels 3-D-Druck oder Spritzguss hergestellt. Durch die Abkehr von der Fertigung aus Blech sind jetzt neue Formen und Konturen möglich. Zwar gab es bislang im Stand der Technik ebenfalls bereits Verdrängerelemente aus Kunststoff, jedoch wurde deren Form der Kontur der Blechelemente nachempfunden. Mithilfe des 3-D-Drucks kann auf besonders einfache Art und Weise ein Verdrängerelement gefertigt werden, das die erfindungsgemäßen Taschen oder Aussparungen aufweist. Aber auch Verdrängerelemente aus Metall können mittels 3-D-Druck hergestellt werden.

Das Verdrängerelementepaar kann beispielsweise aus einem Material der folgenden Gruppe gebildet werden:
- Kunststoff, Metall insbesondere Edelstahl.

Gemäß der Erfindung ist, zumindest im Bereich des sich insbesondere V-förmig erweiternden Ausschnitts, der Abstand der Ebene, in der die Verdrängerkante des ersten Flügelabschnitts liegt und der Ebene, in der die Außenkontur des ersten Flügelabschnitts des gegenüberliegenden Verdrängerelements liegt und der Abstand der Ebene, in der die Verdrängerkante des zweiten Flügelabschnitts und der Ebene, in der die Verdrängerkante des zweiten Flügelabschnitts des gegenüberliegenden Verdrängerelements liegt >= der Dicke der Flügelabschnitte, liegt insbesondere in einem Bereich: Betrag der Dicke der Flügelabschnitte + 0 mm bis 4 mm, insbesondere Betrag der Dicke + 0,1 mm bis 3 mm, insbesondere 0,2 mm bis 1 mm. Hier wird die Dicke, insbesondere maximale Dicke der Flügelabschnitte im sich erweiternden Ausschnitt betrachtet. D.h.der Abstand liegt in einem Bereich >=dem Maß der Verdrängerflügeldicke und <= dem Maß der Verdrängerflügeldicke +4 mm.

Wenn der Abstand der Verdrängerkanten in Transportrichtung betrachtet entsprechend klein gehalten werden kann, kann die Abteilstelle sehr gut einspringen und es ergeben sich keine Falten, da die Flügelabschnitte der gegenüberliegenden Verdrängerelemente dicht beieinanderliegen.

Gemäß einer bevorzugten Ausführungsform erstreckt sich der mindestens eine Flügel nicht radial von einer Halterung, die sich um eine Achse dreht. Somit können sich gegenüberliegende Flügel gut aneinander vorbeibewegen.

Die vorliegende Erfindung wird nachfolgend unter Bezugnahme folgender Figuren näher erläutert:
Figur 1 zeigt schematisch die Darstellung einer Füllmaschine mit einer Vorrichtung 10 zum Abteilen eines gefüllten Wurststrangs.
Figur 2a zeigt perspektivisch eine erfindungsgemäße Ausführungsform.
Figur 2b zeigt in perspektivischer Darstellung einen Verdrängerflügel auf einem Transportmittel gemäß einem bevorzugten Ausführungsbeispiel.
Figur 3 zeigt eine Seitenansicht eines Verdrängerelements gemäß einem Ausführungsbeispiel der vorliegenden Erfindung.
Figur 4a zeigt ein Verdrängerelementepaar gemäß einem bevorzugten Ausführungsbeispiel in drei unterschiedlichen Positionen.
Figur 4b zeigt eine perspektivische Darstellung des in Figur 4a gezeigten Verdrängerelementepaars in größerem Detail.
Figur 4c zeigt eine Seitenansicht auf ein Verdrängerelement gemäß dem Ausführungsbeispiel in Figur 4a und 4b.
Figur 4d zeigt eine Aufsicht auf das in Figur 4b gezeigte Ausführungsbeispiel.
Figur 5a zeigt ein weiteres Ausführungsbeispiel eines Verdrängerelementepaars in drei unterschiedlichen Positionen.
Figur 5b zeigt das Verdrängerelementepaar des in Figur 5a gezeigten Ausführungsbeispiels in größerem Detail.
Figur 5c zeigt eine Seitenansicht auf das Verdrängerelement wie es in Figur 5a und 5b gezeigt ist.
Figur 6a zeigt ein Verdrängerelementepaar gemäß dem Stand der Technik.
Figur 6b zeigt eine Aufsicht auf ein Verdrängerelementepaar gemäß dem Stand der Technik.
Figur 6c zeigt eine Aufsicht auf ein Verdrängerelementepaar in der Abteilposition gemäß dem Stand der Technik.
Figur 6d zeigt eine Seitenansicht auf das Verdrängerelement gemäß dem Stand der Technik
Figur 7 zeigt eine Aufsicht auf ein Verdrängerelementepaar in der Abteilposition gemäß der vorliegenden Erfindung
Figur 8 zeigt eine Seitenansicht eines Flügels gemäß einem weiteren Ausführungsbeispiel gemäß der vorliegenden Erfindung.

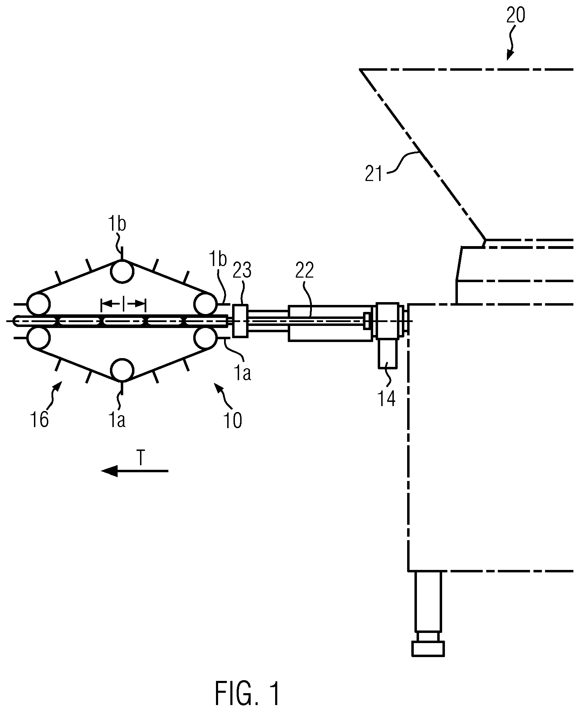

Figur 1 zeigt in schematischer Darstellung ein Beispiel einer Füllmaschine 20 zum Erzeugen eines gefüllten Wurststrangs, der mithilfe der erfindungsgemäßen Vorrichtung 10 in einzelne Wurststrangabschnitte mit einer vorbestimmten Länge unterteilt wird. Die Füllmaschine 20 weist in bekannter Weise einen Fülltrichter 21 auf, über den pastöse Masse, beispielsweise Wurstbrät, eingefüllt und dann über ein nicht dargestelltes Förderwerk in ein Füllrohr 22 geschoben wird. Am Füllrohrende befindet sich z.B. eine Darmbremse 23. Zum Abdrehen des gefüllten Wurststrangs ist hier optional eine Abdreheinrichtung 14, insbesondere ein Abdrehgetriebe, vorgesehen, das über einen Motor angetrieben wird. Mit der Abdreheinrichtung 14 kann das Füllrohr 12 zusammen mit der darauf aufgezogenen Hülle um die Längsachse L gedreht werden.

Durch das Füllrohr 22 wird die pastöse Masse in die z.B. auf dem Füllrohr 22 aufgezogene und durch die Darmbremse 23 gehaltene Hülle, z.B. den Darm, ausgestoßen, wodurch der gefüllte Wurststrang in bekannter Art und Weise erzeugt wird.

Unmittelbar hinter dem Füllrohr 22 befindet sich die Vorrichtung 10 zum Abteilen des gefüllten Wurststrangs. Der Wurststrang soll durch die Vorrichtung 10 in Einzelportionen von bestimmter Länge I unterteilt werden.

Dazu ist mindestens ein Verdrängerelementepaar 1a, 1b vorgesehen. Bei dem in Figur 1 gezeigten Ausführungsbeispiel ist nur beispielhaft eine Transporteinrichtung 16 gezeigt, die gegenüberliegende, umlaufende Transportmittel, z.B. Transportbänder oder Transportketten etc., aufweist, zwischen denen der gefüllte Wurststrang 11 transportiert wird.

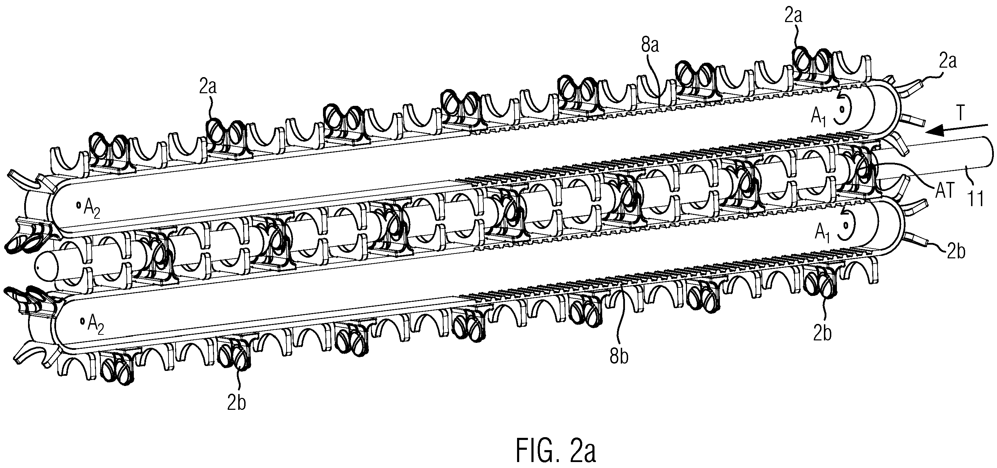

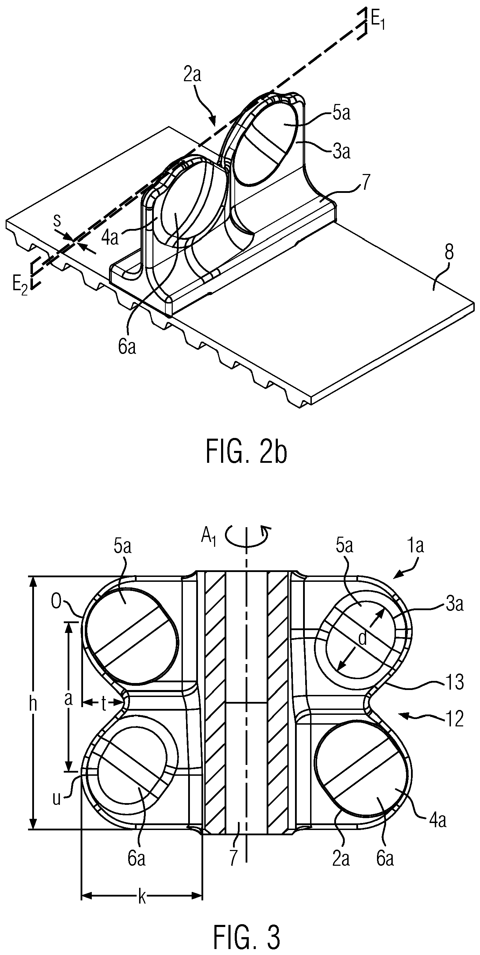

Bei diesem Ausführungsbeispiel sind, wie nachfolgend noch näher erläutert, die Verdrängerelemente 1a, 1b auf dem umlaufenden Transportmittel, z.B. dem umlaufenden Transportband, Kette etc., in insbesondere gleichmäßigen Abständen angeordnet. Diese Ausführungsform wird nachfolgend noch unter Bezugnahme der Figuren 2a und 2b näher erläutert.

Figur 3 zeigt schematisch ein Verdrängerelement gemäß einem Ausführungsbeispiel der Erfindung. Das Verdrängerelement weist mindestens einen Flügel 2a auf, mit einem oberen, d.h. ersten Flügelabschnitt 3a und einem unteren, d.h. zweiten Flügelabschnitt 4a. Zwischen den beiden Flügelabschnitten ist ein sich nach außen erweiternder, insbesondere V-förmiger, randseitig offener Ausschnitt 12 vorgesehen. Im Bereich des V-förmigen Ausschnitts 12 sind die Verdrängerkanten 13 angeordnet.

Der mindestens eine Verdrängerflügel 2a ist fahnenartig an einer Halterung 7 angeordnet, d.h., steht seitlich ab. Der jeweilige Verdrängerflügel kann sich in einer Richtung von der Halterung erstrecken die nicht der Radialrichtung entspricht. Entsprechendes ist vorteilhaft, damit sich die Verdrängerflügel in der Mittenebene überhaupt überlappen können.

Die Halterung 7 ist mit einem Drehmechanismus 15, der beispielsweise eine Antriebswelle aufweist, verbindbar um das jeweilige Verdrängerelement um eine Achse A1 zu drehen. Die Höhe des Verdrängerelements h liegt z.B. in einem Bereich von 20 mm bis 80 mm, insbesondere 30 mm bis 50 mm. Die Abmessung a vom oberen Punkt O der Aussparung 12 zum unteren Punkt U der Aussparung 12 liegt z.B. in einem Bereich von 15 mm bis 75 mm, insbesondere zwischen 25 mm und 45 mm. Die Tiefe t des Ausschnitts 12 liegt z.B. in einem Bereich von 5 mm bis 30 mm, insbesondere von 7 mm bis 25 mm. Die Erstreckung k des unteren und oberen Flügelabschnitts 3a, 4a nach außen liegt z.B. in einem Bereich von 30 mm bis 80 mm. Die Stärke der Flügel liegt z.B. in einem Bereich von 1 mm bis 6 mm, vorzugsweise von 1 mm bis 3 mm. Entsprechende Verdrängerelemente sind für Wurstkaliber in einem Bereich von 8 mm bis 60 mm geeignet. Die Erfindung ermöglicht auch die Verwendung der Verdrängerelemente im Zusammenhang mit Clipmaschinen, bei denen eben größere Wurstdurchmesser (z.B. bis 60 mm) verarbeitet werden.

Sowohl der obere als auch der untere Flügelabschnitt 3a, 4a weisen seitlich gewölbte Taschen 5a, 6a auf, die ermöglichen, dass sich gegenüberliegende Verdrängerelemente ohne Kollision aneinander vorbei bewegen können, d.h., dass die äußersten Punkte O und U der Außenkontur bzw. der Verdrängerkanten 13 sich durch den durch die Taschen gebildeten Freiraum bewegen können.

Alternativ ist es auch möglich, statt der Taschen 5a,5b, 6a, 6b einfach eine Öffnung in der Fläche des oberen und unteren Flügelabschnitts innerhalb der Außenkontur der Flügel auszubilden. Dies ermöglicht ebenfalls, dass die Flügel sich problemlos aneinander vorbei bewegen können. Allerdings bringt die Lösung mit den Taschen eine verbesserte Stabilität mit sich und der Wurstrang kann beim Abteilen besser gestützt werden.

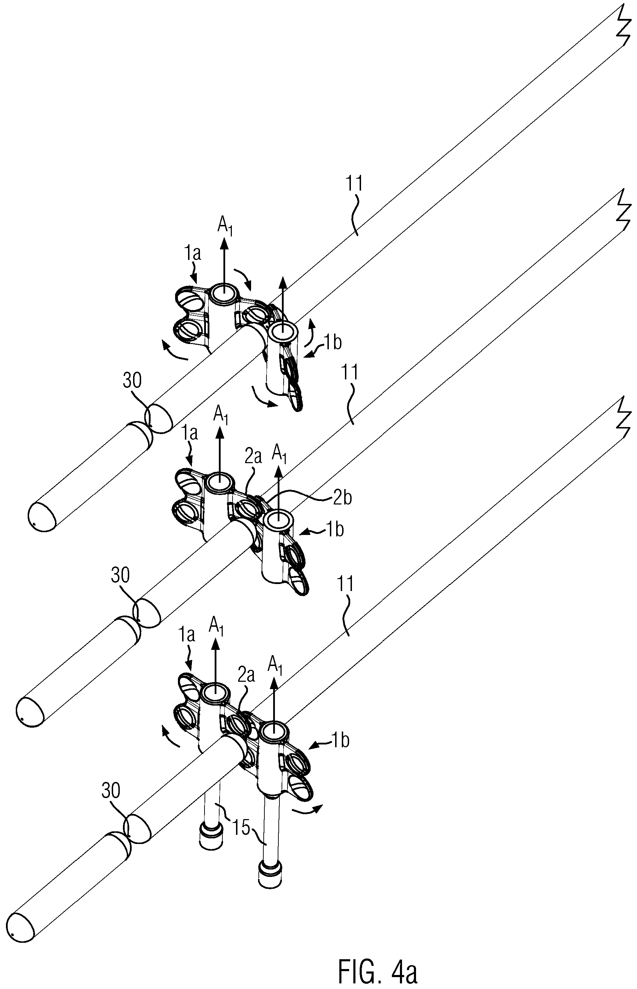

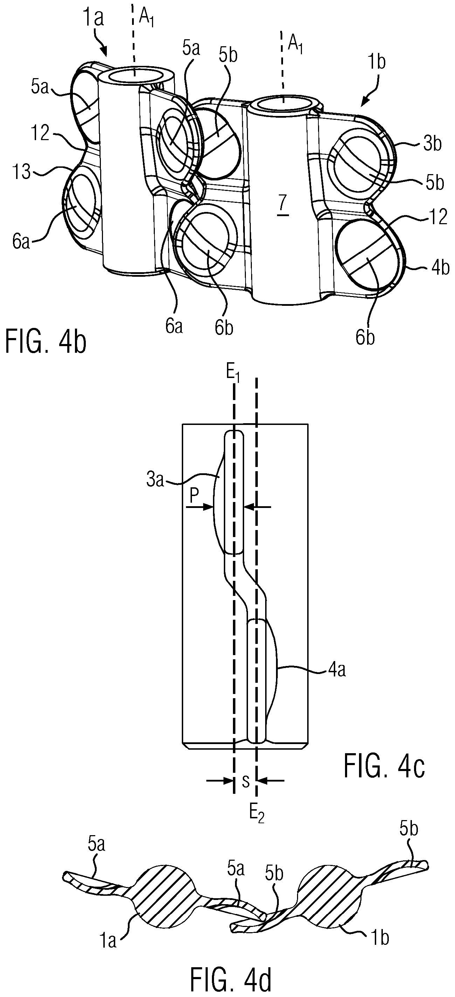

Im Zusammenhang mit Figuren 4a bis 4d wird nun eine erste Ausführungsform eines Verdrängerelements erläutert, bei dem die übereinander (oder seitlich nebeneinander) angeordneten Flügelabschnitte 3a, 4a in parallelen Ebenen E1, E2 versetzt zueinander liegen. Das ist insbesondere in der Seitenansicht in Figur 4c erkennbar. Die Verdrängerkante 13 des oberen Flügelabschnitts 3a liegt in einer ersten Ebene E1 und die Verdrängerkante des unteren Flügelabschnitts 4a liegt in einer zweiten Ebene E2, die parallel zur Ebene E1 ist, wobei die Ebenen E1 und E2 einen Abstand s aufweisen, der in einem Bereich liegt, der von der Verdrängerflügeldicke im Bereich der Verdrängerkante im sich erweiternden Abschnitt 12 abhängt ( bei nicht konstanter Dicke wird die maximale Dicke betrachtet): Abstand s = Verdrängerflügeldicke + 0 mm bis 4 mm, insbesondere + 0,1 mm bis 3 mm, noch bevorzugter + 0,2 bis 1 mm, entspricht. Die Flügelabschnitte 3a, 4a grenzen in einem Übergangsbereich aneinander an. Die Ebenen E1 und E2 sind vorzugsweise parallel zur Drehachse, insbesondere parallel zu einer Ebene, die durch einen Vektor entlang der Drehachse A1 und einem Vektor senkrecht zur Drehachse A1 aufgespannt wird.

Bei diesem Ausführungsbeispiel ist im oberen Flügelabschnitt 3a, 3b eines jeweiligen Verdrängerelements 1a, 1b die gewölbte Tasche 5a, 5b zu einer ersten Seite, in Figur 4c nach links, nach außen gewölbt. Im unteren Flügelabschnitt 4a, 4b wölbt sich die Tasche 6a, 6b zur gegenüberliegenden Seite. Figur 4d zeigt einen Querschnitt durch die Taschen 5a. Durch die Wölbung entsteht ein Freiraum, derart, dass sich die Flügel ohne Kollision aneinander vorbeibewegen können. Bei dem in Figur 4 gezeigten Ausführungsbeispiel greifen der obere (erste) und untere (zweite) Flügelabschnitt 3a, 3b, 4a, 4b der gegenüberliegenden Verdrängerelemente 1a, 1b verschränkt ineinander ein. Das heißt, dass in einer Abteilposition, in der der Wurststrang 11 maximal eingeschnürt ist und sich die beiden hier V-förmig erweiternden Abschnitte 12 maximal überlagern, der obere Flügelabschnitt 3a des ersten Verdrängerelements und der untere Flügelabschnitt 4b des zweiten Verdrängerelements in einer Ebene E1 liegen und der obere Flügelabschnitt 3b des zweiten Verdrängerelements und der untere Flügelabschnitt 4a des zweiten Verdrängerelements in einer Ebene E2 liegen. Eine solche Abteilposition ist in der untersten Darstellung in Figur 4a dargestellt.

Die oberste Darstellung in Figur 4a zeigt, wie sich die Verdrängerelemente in Pfeilrichtung um die jeweilige Achsen A1 drehen und anfangen den einlaufenden Wurststrang 11 zu unterteilen und pastöse Masse zu verdrängen. Durch die Taschen können sich die Flügel aneinander vorbeibewegen, ohne zu blockieren und ein Abstand zwischen den beiden Drehachsen von z.B. 50 mm bis 150 mm kann realisiert werden. Die Flügel 2a, 2b bewegen sich soweit aufeinander zu, bis sie in der Abteilposition sind, wie in der untersten Darstellung in Figur 4a zu erkennen ist. Wird der zu befüllende Wurststrang 11 über die Abdreheinrichtung verdrillt, kann jetzt die Abdrehstelle 30 einspringen und die Würste sind unterteilt. Danach bewegen sich die Flügel 2a, 2b wieder in Pfeilrichtung auseinander. Durch die Taschen 5a, 5b, 6a, 6b können sich die Flügel 2a, 2b wieder ohne Kollision auseinanderbewegen. Der Antrieb erfolgt über einen Drehmechanismus 15, der mit der Halterung 7 verbindbar ist, hier über die angetriebene Welle 16. Die Tiefe der Tasche p ergibt sich aus dem Achsabstand der Antriebsachsen und der Ausgestaltung der Verdrängerelemente. Die Taschen wölben sich seitlich nach außen und können z.B. im Wesentlichen oval ausgebildet sein.

Auch eine nicht dargestellte Öffnung ist derart ausgebildet, dass dich die Verdrängerelemente entsprechend aneinander vorbeibewegen können.

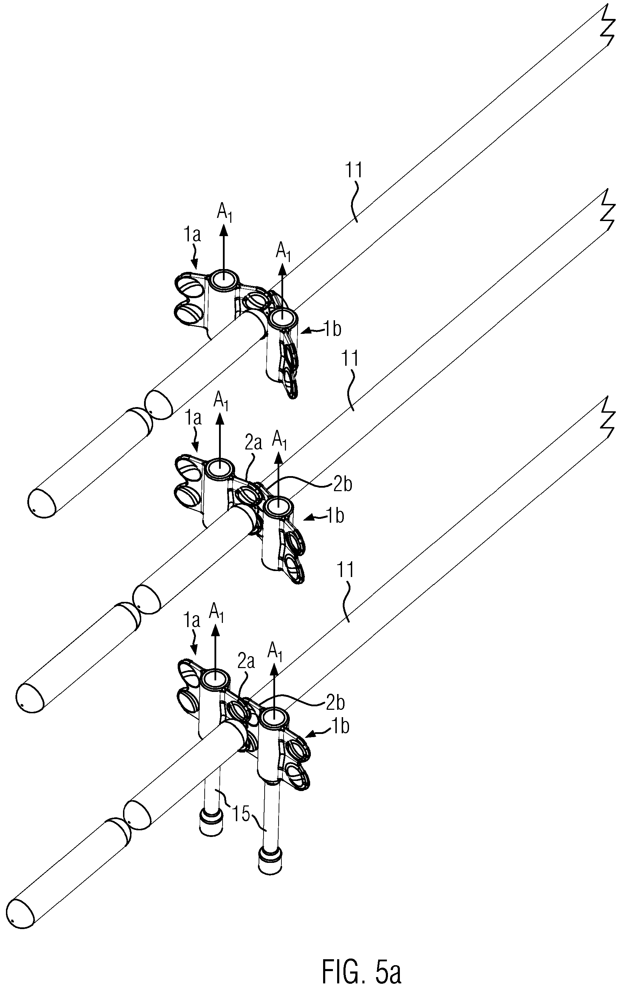

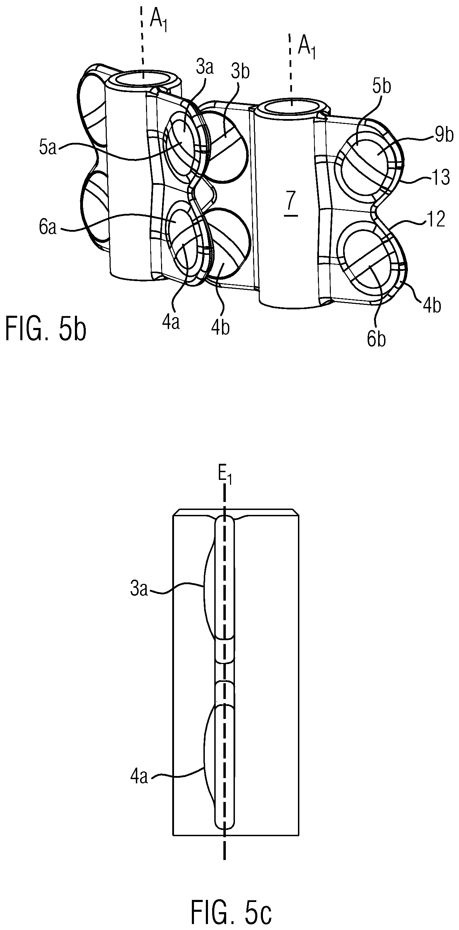

Figur 5 c zeigt ein weiteres Ausführungsbeispiel, das im Wesentlichen dem im Zusammenhang mit Figur 4 gezeigten Ausführungsbeispiel entspricht, mit der Ausnahme, dass die Verdrängerkanten 13 des oberen und unteren Flügelabschnitts, 3a, 3b, 4a, 4b eines jeweiligen Verdrängerelements zumindest im Bereich des sich erweiternden Abschnitts 12 in einer gemeinsamen Ebene E1 liegen, d.h. nicht versetzt zueinander angeordnet sind. Ansonsten entspricht dieses Ausführungsbeispiel dem in Zusammenhang mit Figur 4a gezeigten Ausführungsbeispiel. Dabei sind in einer Abteilposition, in der der Wurststrang 11 maximal eingeschnürt ist und die beiden sich erweiternden Ausschnitte 12 maximal überlagert sind, die Flügel 2a, 2b im Wesentlichen parallel nebeneinander angeordnet, wie aus der untersten Darstellung in Figur 5a hervorgeht. Auch hier ermöglichen die Aussparungen, bzw. die Taschen 5a, 5b, 6a, 6b, dass sich die Flügel ohne Kollision aneinander vorbei bewegen können. Dabei liegen in der Abteilposition z.B. der obere und untere Flügelabschnitt 3a, 4a des ersten Verdrängerelements in einer Ebene Ea und der obere Flügelabschnitt 4a und der untere Flügelabschnitt 4b des zweiten Verdrängerelements 2b in einer Ebene Eb parallel zur Ebene Ea, die wie zuvor beschrieben, parallel zu einer Ebene sind, die durch einen Vektor entlang der Drehachse A1 und einem Vektor senkrecht zur Drehachse A1 aufgespannt ist.

Der Abstand der Ebenen liegt auch hier z.B. insbesondere in einem Bereich vom Maß der Verdrängerflügeldicke im Bereich der Verdrängerkanten im sich erweiternden Bereich 12 zuzüglich +0 mm bis 4 mm, insbesondere 0,1 bis 3 mm, vorzugsweise 0,2 bis 1 mm, zumindest im Bereich der sich erweiternden Aussparung 12.

Figur 5b zeigt im Detail, wie sich die Flügel 2a, 2b aufeinander zu bewegen können.

Bei den in Figur 4a und 5a gezeigten Vorrichtungen zum Abteilen eines Wurststrangs wird der Wurststrang über eine nicht dargestellte Transporteinrichtung in Transportrichtung T gefördert, z.B. durch zwei gegenüberliegende Transportbänder.

Bei dem in den Figuren 4 und 5 gezeigten Ausführungsbeispiel drehen sich die Verdrängerelemente jeweils um eine Achse A1, insbesondere die Mittelachse - rotieren also. Es ist aber auch möglich, dass die Verdrängerelemente um mehrere Drehachsen A1, A2 umlaufend bewegt werden, wie insbesondere aus Figuren 2a und 2b hervorgeht. Die Verdrängerbänder können sowohl wie in Figur 2a übereinander angeordnet sein. Die Achsen können aber auch vertikal stehen, sodass die beiden Verdrängerbänder nebeneinander angeordnet sind. Dann sind die ersten und zweiten Flügelabschnitte nicht übereinander angeordnet, sondern nebeneinander. Ansonsten ist die Ausbildung der Verdrängerelemente genau wie in den vorherigen Ausführungsbeispielen.

Wie aus Figur 2b hervorgeht, ist ein Verdrängerelement, das hier einen Flügel 2a aufweist, auf einem Transportmittel 8 über die Halterung 7 befestigt. Auch hier weist der Flügel 2a einen ersten und zweiten Flügelabschnitt 3a, 3b auf, die hier z.B. wie in Zusammenhang mit dem in den Figu-ren 4 gezeigten Ausführungsbeispiel ausgebildet sind, d.h. versetzt zueinander angeordnet sind. Auch wenn nicht dargestellt, können der erste und zweite Flügelabschnitt 3a, 3b und 4a, 4b wie in Zusammenhang mit dem in Figur 5 gezeigten Ausführungsbeispiel in einer Ebene angeordnet sein.

Wie aus Figur 2a hervorgeht, sind die Verdrängerelemente in vorbestimmten Abständen auf einem Transportmittel, hier auf einem Transportband 8, angeordnet, das um zwei Achsen A1, A2 umläuft und das gleichzeitig als Transporteinrichtung in Transportrichtung T dient. Das Band kann aber auch um mehrere Drehachsen umlaufen.

Wie insbesondere aus Figur 2a hervorgeht, bewegen sich die Flügel 2a, 2b aufeinander zu, wobei der Wurststrang zwischen den Verdrängerelementen in Transportrichtung T gefördert wird.

Die Flügel 2a, 2b greifen, wie in Zusammenhang mit den Figuren 4 und 5 gezeigt, entweder über Kreuz ineinander ein oder aber kommen parallel zueinander zu liegen. Bei dem in Figur 2a gezeigten Ausführungsbeispiel greifen die ersten und zweiten Verdrängerelemente 1a, 1b verschränkt ineinander ein. An der mit AT gekennzeichneten Stelle sind die beiden Flügel 2a, 2b in Eingriff, d.h. in der Abteilposition. Hier kann die Abdrehstelle einspringen. Die durch die Bänder 8a, 8b bewegten Verdrängerelementpaare führen den unterteilten Wurststrang in Transportrichtung T mit. Die umlaufenden Transportmittel 8a, 8b dienen somit auch als Transporteinrichtung. Zwischen den Verdrängerelementpaaren können Führungselemente auf den Transportmitteln angeordnet sein, die dafür sorgen, dass der Wurststrang, insbesondere bei längeren Würsten, nicht seitlich ausweicht, sondern entlang seiner Längsachse in Transportrichtung T gefördert wird.

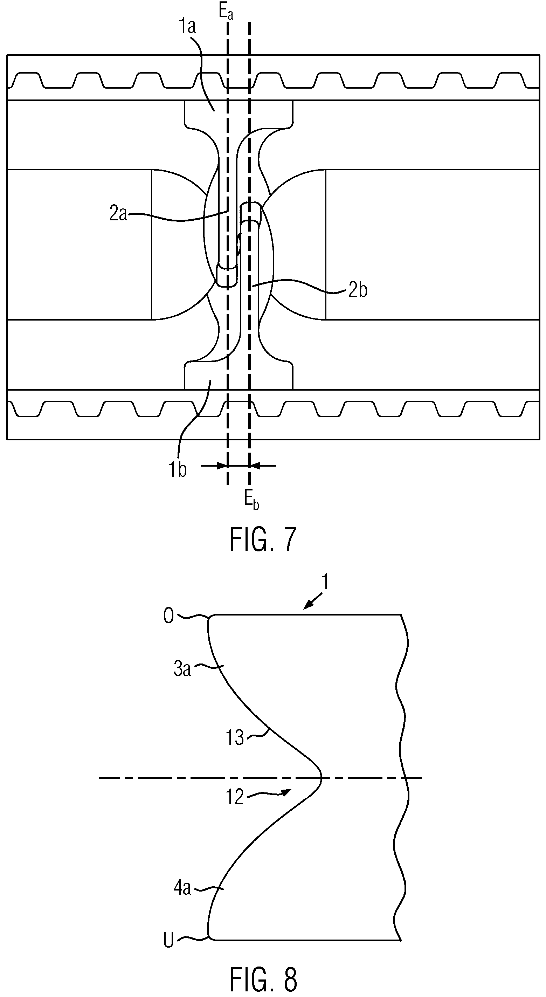

Figur 7 zeigt, dass durch die parallele Ausrichtung der Verdrängerkanten der Flügel 2a, 2b und dem geringen Abstand der Flügel zumindest im Bereich zwischen den äußeren Punkten O und U, der vorzugsweise konstant ist, verhindert werden kann, dass sich eine entsprechende Falte zwischen den Flügeln der Verdrängerelemente ausbildet, wie in Figur 6c gezeigt worden ist. In Figur 7 erkennt man deutlich, dass die Flügel 2a, 2b in zwei voneinander beabstandeten parallelen Ebenen Ea, Eb angeordnet sind.

Die Verdrängerelemente sind in den vorher gezeigten Ausführungsbeispielen derart ausgebildet, dass sich die Ausschnitte 12 insbesondere rautenförmig überlagern, derart, dass noch eine kleine Öffnung verbleibt, so dass der Wurststrang nicht abgeschert wird. Es ist aber auch möglich das Verdrängerelementepaar so ausbilden oder derart voneinander zu beabstanden, dass sich die Ausschnitte vollständig überlagern und der Wurststrang zur Erzeugung von Einzelwürsten durchtrennt wird. Dazu kann die Verdrängerkante von mindestens einem Verdrängerelement zumindest teilweise als Klinge ausgebildet sein oder eine Klinge aufweisen.

Es können mehrere Flügel um den Umfang einer Halterung 7 eines Verdrängerelements angeordnet sein und mehrere Verdrängerelemente auf den umlaufenden Transportmitteln 8. Somit kann die Produktionsgeschwindigkeit gesteigert werden.

Die Vorrichtung weist weiter gemäß einer bevorzugten Ausführungsform eine Abdreheinrichtung 14 zum Drehen des zu befüllenden Wurststrangs 11 um seine Längsachse L auf und/oder z.B. in Transportrichtung nach den Verdrängerelementen 1a, 1b, eine Einrichtung zum Clippen oder eine Einrichtung zum Abbinden oder Verkleben oder Verschweißen des Wurststrangs nach dem Verdrängen.

Figur 8 zeigt eine weitere mögliche Ausführungsform eines Flügels der auch einen V-förmigen Ausschnitt 12 aufweist und insbesondere für größere Kaliber bis 60 mm geeignet ist. Hier sind die Flügelabschnitte derart ausgebildet, dass sie oben und unten die größte Abmessung t aufweisen, d.h. die Punkte O und U an der Ober- und Unterkante liegen.

## Patentansprüche

1. Vorrichtung (10) zum Abteilen eines Wurststrangs (11) mit einem Verdrängerelementepaar (1a, 1b) zum Abteilen eines zwischen den Verdrängerelementen (1a, 1b) transportierten Wurststrangs (11) in Einzelwürste, wobei jedes Verdrängerelement (1a, 1b) mindestens einen Flügel (2a, 2b) mit einem ersten Flügelabschnitt (3a, 3b) und einem zweiten Flügelabschnitt (4a, 4b) aufweist, zwischen denen ein sich nach außen erweiternder, insbesondere V-förmiger Ausschnitt (12) ausgebildet ist, wobei sowohl der erste als auch der zweite Flügelabschnitt (3a, b), (4a, b) eine zur Seite gewölbte Tasche (5a, 5b, 6a, 6b) oder eine Öffnung aufweist
und mit
einer Transporteinrichtung (16) zum Transportieren des gefüllten Wurststrangs (11) zwischen den gegenüberliegenden Verdrängerelementen (1a, 1b) und
einen Drehmechanismus, um die Verdrängerelemente (1a, 1b) um eine jeweilige Drehachse (A1) zu drehen oder umlaufend um mehrere Drehachsen (A1, A2) zu bewegen und wobei
zumindest im Bereich des sich insbesondere V-förmig erweiternden Ausschnitts (12) der Abstand zwischen der Ebene (E1), in der die Verdrängerkante (13) des ersten Flügelabschnitts (3a) liegt und der Ebene (E2), in der die Verdrängerkante des ersten Flügelabschnitts (3b) des gegenüberliegenden Verdrängerelements (1b) liegt und
der Abstand zwischen der Ebene, in der die Verdrängerkante des zweiten Flügelabschnitts (4a) und der Ebene, in der die Verdrängerkante des zweiten Flügelabschnitts (4b) des gegenüberliegenden Verdrängerelements (1b) liegt, in einem Bereich >=dem Maß der Verdrängerflügeldicke und <= dem Maß der Verdrängerflügeldicke +4 mm liegt

2. Vorrichtung (10) nach Anspruch 1, **dadurch gekennzeichnet, dass** die Verdrängerkanten (13) des ersten und zweiten Flügelabschnitts (2a, 2b), (3a, 3b) eines jeweiligen Verdrängerelements (1a, 1b) zumindest im Bereich des sich erweiternden Abschnitts (12) entweder
a) in im Wesentlichen parallelen Ebenen (E1, E2) oder
b) in einer gemeinsamen Ebene (E1) liegen.

3. Vorrichtung (10) nach mindestens Anspruch 2, **dadurch gekennzeichnet, dass** im Fall a)
im ersten Flügelanschnitt (3a, 3b) eines jeweiligen Verdrängerelements die gewölbte Tasche (5a, 5b) zu einer ersten Seite nach außen gewölbt ist und im zweiten Flügelabschnitt (4a, 4b) die gewölbte Tasche (6a, 6b) zur gegenüberliegenden Seite nach außen gewölbt ist und im Fall b) die gewölbten Taschen (5a, 5b, 6a, 6b) im ersten und zweiten Flügelabschnitt (3a, 3b, 4a, 4b) zur gleichen Seite gewölbt sind.

4. Vorrichtung (10) nach mindestens einem der Ansprüche 1-3, **dadurch gekennzeichnet, dass** in einer Abteilposition, in der der Wurststrang (11) maximal eingeschnürt ist und die beiden sich erweiternden Ausschnitte (12) maximal überlagert sind,
im Fall a)
der Flügel (2a) des ersten Verdrängerelements (1a) und der Flügel (2b) des zweiten Verdrängerelements (1b) verschränkt ineinandergreifen können und
im Fall b)
die Flügel (2a, 2b) im Wesentlichen parallel nebeneinander angeordnet werden können.

5. Vorrichtung (10) nach Anspruch 1, **dadurch gekennzeichnet, dass** die Flügel (2a, 2b) fahnenartig an einer Halterung (7) angeordnet sind, über die sie mit einem Drehmechanismus verbindbar sind, um die Verdrängerelemente (1a, 1b) um eine Achse (A1) zu drehen oder umlaufend um mehrere Achsen (A1, A2) zu bewegen.

6. Vorrichtung nach einem der Ansprüche 1 bis 5, **dadurch gekennzeichnet, dass** die Vorrichtung weiter eine Abdreheinrichtung (14) zum Drehen des zu befüllenden Wurststrangs (11) um seine Längsachse (L) aufweist und/oder die Vorrichtung eine Einrichtung zum Clippen oder eine Einrichtung zum Abbinden oder Verkleben oder Verschweißen des Wurststrangs nach dem Verdrängen aufweist.

7. Vorrichtung nach mindestens einem der Ansprüche 1 bis6 **dadurch gekennzeichnet, dass** die Verdrängerelemente (1a, 1b) derart angeordnet sind, dass in einer Abteilposition, in der die sich erweiternden Ausschnitte (12) der gegenüberliegenden Verdrängerelemente (1a, 1b) maximal überlagert sind, die jeweiligen Verdrängerkanten (13) des ersten Flügelabschnitts (3a, 3b), (4a, 4b) eines Verdrängerelements und des zweiten Flügelabschnitts (3a, 3b), (4a, 4b) des gegenüberliegenden Verdrängerelements zumindest im Bereich des jeweiligen sich erweiternden Ausschnitts (12) im Wesentlichen in parallelen Ebenen (Ea, Eb) liegen insbesondere die Ebenen maximal um 0 Grad bis ±5 Grad zueinander geneigt sind.

8. Vorrichtung nach mindestens einem der Ansprüche 1 bis 7, **dadurch gekennzeichnet, dass** die Verdrängerelemente (1a, 1b) um ihre Mittelachse (A1) gedreht werden können und die Mittelachse im Wesentlichen parallel zu den Ebenen (E1, E2) verläuft, in denen die Verdrängerkante (13) der Flügelabschnitte (3a, 3b), (4a, 4b) zumindest im Bereich des sich erweiternden Ausschnitts (12) liegt und vorzugsweise senkrecht zur Transportrichtung (T) läuft.

9. Vorrichtung nach mindestens einem der Ansprüche 1 bis 8 ,**dadurch gekennzeichnet, dass** die gegenüberliegenden Verdrängerelemente (1a, 1b) jeweils an zwei um mehrere Achsen (A1, A2) umlaufenden Transportmittel (8), insbesondere Transportkette oder Transportband, angeordnet sind und die Drehachsen (A1, A2) vorzugsweise im Wesentlichen parallel zu den Ebenen (E1, E2) verlaufen, in denen die Verdrängerkante der ersten und zweiten Flügelabschnitte im Bereich des Ausschnitts (12) angeordnet sind und vorzugsweise senkrecht zur Transportrichtung T verlaufen.

10. Vorrichtung nach mindestens einem der Ansprüche 1 bis 9, **dadurch gekennzeichnet, dass** ein Verdrängerelement (1a, 1b) mehrere umlaufende Flügel (2a, 2b) aufweist oder
mehrere Verdrängerelemente (1a, 1b) mit einem jeweiligen Flügel (2a, 2b) auf dem jeweiligen umlaufenden Transportmittel (17) angeordnet sind.

11. Vorrichtung nach mindestens einem der Ansprüche 1 bis 102, **dadurch gekennzeichnet, dass** die Verdrängerelemente (1a, 1b) mittels 3-D-Druck oder Spritzguss hergestellt werden.

12. Vorrichtung (10) nach mindestens einem der Ansprüche 1 bis 11, **dadurch gekennzeichnet, dass** das Verdrängerelement aus einem Material aus der folgenden Gruppe gebildet ist:
Kunststoff, Metall, insbesondere Edelstahl.

13. Vorrichtung (10) nach mindestens einem der Ansprüche 1 bis 12, **dadurch gekennzeichnet, dass** sich der mindestens eine Flügel (2a, 2b) nicht radial von einer Halterung (7), die sich um eine Achse dreht, erstreckt.

14. Vorrichtung nach Anspruch 1, **dadurch gekennzeichnet, dass** der Abstand in einem Bereich >= dem Maß der Verdrängerflügeldicke + 0,1 mm und <= dem Maß der Verdrängerflügeldicke + 3mm liegt.

15. Vorrichtung nach Anspruch 1 oder 14, **dadurch gekennzeichnet, dass** der Abstand im Wesentlichen konstant ist.

## Claims

1. Device (10) for dividing a sausage strand (11) with a pair of displacement elements (1a, 1b) for dividing a sausage strand (11) transported between the displacement elements (1a, 1b) into individual sausages, wherein each displacement element(1a, 1b) has at least one wing (2a, 2b) with a first wing section (3a, 3b) and a second wing section (4a, 4b), between which an outwardly widening, in particular V-shaped cutout (12) is formed, both the first and the second wing section (3a, b), (4a, b) have a laterally curved pocket (5a, 5b, 6a, 6b) or an opening and with
a conveying device (16) for conveying the filled sausage strand (11) between the opposing displacement elements (1a, 1b) and
a rotary mechanism for rotating the displacement elements (1a, 1b) about a respective axis of rotation (A1) or for moving them such that they circulate around a plurality of axes (A1, A2), wherein
at least in the region of the cutout (12), which widens in particular in a V-shape, the distance between the plane (E1) in which the displacement edge (13) of the first wing section (3a) is located and the plane (E2) in which the displacement edge of the first wing section (3b) of the opposite displacement element(1b) is located, and
the distance between the plane in which the displacement edge of the second wing section (4a) is located and the plane in which the displacement edge of the second wing section (4b) of the opposite displacement element (1b) is located is in a range>= the dimension of the displacement wing thickness and <= the dimension of the displacement wing thickness +4 mm.

2. Device (10) according to claim 1, **characterized in that** the displacement edges (13) of the first and second wing sections (2a, 2b), (3a, 3b) of a respective displacement element(1a, 1b), at least in the region of the widening section (12), lie either
a) in essentially parallel planes (E1, E2) or
b) lie in a common plane (E1).

3. Device (10) according to at least claim 2, **characterized in that** in case a) in the first wing section (3a, 3b) of a respective displacement element, the curved pocket (5a, 5b) is curved outwards to a first side and in the second wing section (4a, 4b) the curved pocket (6a, 6b) is curved outwards to the opposite side and in case b) the curved pockets (5a, 5b, 6a, 6b) in the first and second wing sections (3a, 3b, 4a, 4b) are curved to the same side.

4. Device (10) according to at least one of claims 1-3, **characterized in that** at a division position in which the sausage strand (11) is maximally constricted and the two widening cutouts (12) overlap maximally
in case a)
the wing (2a) of the first displacement element (1a) and the wing (2b) of the second displacement element (1b) can interengage, and
in case b)
the wings (2a, 2b) can be arranged substantially parallel side by side.

5. Device (10) according to claim 1, **characterized in that** the wings (2a, 2b) are arranged in a flag-like manner on a holder (7), via which they can be connected to a rotary mechanism in order to rotate the displacement elements (1a, 1b) about an axis (A1) ) or for moving them such that they circulate around a plurality of axes (A1, A2).

6. Device according to one of claims 1 to 5, **characterized in that** the device further comprises a twist-off unit (14) for rotating the sausage strand (11) to be filled about its longitudinal axis (L) and/or the device comprises a device for clipping or a device for binding or gluing or welding the sausage strand after displacement.

7. Device according to at least one of claims 1 to 6, **characterized in that** the displacement elements (1a, 1b) are arranged in such a way that, in a division position in which the widening cutouts (12) of the opposing displacement elements (1a, 1b) overlap maximally, the respective displacement edges (13) of the first wing section (3a, 3b), (4a, 4b) of one displacement element and the second wing section (3a, 3b), (4a, 4b) of the opposite displacement element lie essentially in parallel planes (Ea, Eb) at least in the area of the respective widening cutout (12), in particular the planes are inclined at most by 0 degrees to± 5 degrees relative to one another.

8. Device according to at least one of claims 1 to 7, **characterized in that** the displacement elements (1a, 1b) can be rotated about their central axis (A1) and that the central axis extends substantially parallel to the planes (E1, E2), in which the respective displacement edge (13) of the wing sections (3a, 3b), (4a, 4b) is located at least in the area of the widening cutout (12), and extends preferably perpendicular to the conveying direction (T).

9. Device according to at least one of claims 1 to 8, **characterized in that** the respective opposed displacement elements (1a, 1b) are arranged on two conveying units (8), in particular a conveying chain or a conveyor belt, which circulate around a plurality of axes (A1, A2), and that the axes of rotation (A1, A2) preferably extend substantially parallel to the planes (E1, E2), in which the displacement edges of the first and second wing sections are arranged in the area of the cutout (12), and extend preferably perpendicular to the conveying direction (T).

10. Device according to at least one of claims 1 to 9, **characterized in that** a displacement element(1a, 1b) has a plurality of circulating wings (2a, 2b) or
or that
a plurality of displacement elements (1a, 1b) have a respective wing (2a, 2b) arranged on the respective circulating conveying unit (17).

11. Device according to at least one of claims 1 to 10, **characterized in that** the displacement elements (1a, 1b) are manufactured by means of 3D printing or injection moulding.

12. Device (10) according to at least one of claims 1 to 11, **characterized in that** the displacement element is formed from a material from the following group:
plastic, metal, especially stainless steel.

13. The device (10) according to at least one of claims 1 to 12, **characterized in that** the at least one wing (2a, 2b) does not extend radially from a support (7) that rotates about an axis.

14. Device according to claim 1, **characterized in that** the distance lies in a range >= the dimension of the displacement wing thickness + 0.1 mm and <= the dimension of the displacement wing thickness + 3 mm.

15. Device according to claim 1 or 14, **characterized in that** the distance is essentially constant.

## Revendications

1. Dispositif (10) pour diviser un boudin de saucisses (11) avec une paire d'éléments pousseurs (1a, 1b) pour diviser un boudin de saucisses (11) transporté entre les éléments pousseurs (1a, 1b) en saucisses individuelles, chaque élément pousseur (1a, 1b) comportant au moins une aile (2a, 2b) avec une première section d'aile (3a, 3b) et une deuxième section d'aile (4a, 4b), entre lesquelles est formée une découpe (12) qui s'élargit vers l'extérieur, en particulier en forme de V, aussi bien la première que la deuxième section d'aile (3a, b), (4a, b) présentant une poche (5a, 5b, 6a, 6b) bombée vers le côté ou une ouverture et avec
un dispositif de transport (16) pour transporter le boudin de saucisses rempli (11) entre les éléments pousseurs opposés (1a, 1b) et
un mécanisme de rotation pour faire tourner les éléments pousseurs (1a, 1b) autour d'un axe de rotation respectif (A1) ou pour les déplacer en rotation autour de plusieurs axes de rotation (A1, A2) et dans lequel
au moins dans la zone de la découpe (12) qui s'élargit en particulier en forme de V, la distance entre le plan (E1) dans lequel se trouve le bord de poussée (13) de la première section d'aile (3a) et le plan (E2) dans lequel se trouve le bord de poussée de la première section d'aile (3b) de l'élément pousseur (1b) opposé et
la distance entre le plan dans lequel se trouve le bord de poussée de la deuxième section d'aile (4a) et le plan dans lequel se trouve le bord de poussée de la deuxième section d'aile (4b) de l'élément pousseur opposé (1b) se situe dans une plage ≥ à la dimension de l'épaisseur de l'aile de poussée et ≤ à la dimension de l'épaisseur de l'aile de poussée +4 mm.

2. Dispositif (10) selon la revendication 1, **caractérisé en ce que** les bords de poussée (13) de la première et de la deuxième section d'aile (2a, 2b), (3a, 3b) d'un élément pousseur respectif (1a, 1b), au moins dans la zone de la section qui s'élargit (12), sont situés soit
a) dans des plans sensiblement parallèles (E1, E2) ; soit
b) dans un plan commun (E1).

3. Dispositif (10) selon au moins la revendication 2, **caractérisé en ce que** dans le cas a), dans la première section d'aile (3a, 3b) d'un élément pousseur respectif, la poche bombée (5a, 5b) est bombée vers l'extérieur d'un premier côté et dans la deuxième section d'aile (4a, 4b), la poche bombée (6a, 6b) est bombée vers l'extérieur du côté opposé et, dans le cas b), les poches bombées (5a, 5b, 6a, 6b) dans la première et la deuxième section d'aile (3a, 3b, 4a, 4b) sont bombées vers le même côté.

4. Dispositif (10) selon au moins l'une des revendications 1 à 3, **caractérisé en ce que**, dans une position de compartimentage dans laquelle le boudin de saucisse (11) est resserré au maximum et les deux découpes (12) qui s'élargissent sont superposées au maximum,
dans le cas a)
l'aile (2a) du premier élément pousseur (1a) et l'aile (2b) du deuxième élément pousseur (1b) peuvent s'imbriquer l'une dans l'autre, et
dans le cas b)
les ailes (2a, 2b) peuvent être disposées sensiblement parallèlement les unes à côté des autres.

5. Dispositif (10) selon la revendication 1, **caractérisé en ce que** les ailes (2a, 2b) sont disposées à la manière d'un drapeau sur un support (7) par lequel elles peuvent être reliées à un mécanisme de rotation pour faire tourner les éléments pousseurs (1a, 1b) autour d'un axe (A1) ou pour les déplacer en rotation autour de plusieurs axes (A1, A2).

6. Dispositif selon l'une des revendications 1 à 5, **caractérisé en ce que** le dispositif présente en outre un dispositif de torsion (14) pour faire tourner le boudin de saucisse (11) à remplir autour de son axe longitudinal (L) et/ou **en ce que** le dispositif présente un dispositif de clippage ou un dispositif pour lier ou coller ou souder le boudin de saucisse après la poussée.

7. Dispositif selon au moins l'une des revendications 1 à 6, **caractérisé en ce que** les éléments pousseurs (1a, 1b) sont disposés de telle sorte que, dans une position de séparation dans laquelle les découpes (12) qui s'élargissent des éléments pousseurs (1a, 1b) opposés sont superposées au maximum, les bords de poussée (13) respectifs du premier tronçon d'aile (3a, 3b), (4a, 4b) d'un élément pousseur et de la deuxième section d'aile (3a, 3b), (4a, 4b) de l'élément pousseur opposé se trouvent, au moins dans la zone de la découpe respective qui s'élargit (12), essentiellement dans des plans parallèles (Ea, Eb), en particulier les plans sont inclinés au maximum de 0 degré à ±5 degrés l'un par rapport à l'autre.

8. Dispositif selon au moins l'une des revendications 1 à 7, **caractérisé en ce que** les éléments pousseurs (1a, 1b) peuvent être tournés autour de leur axe central (A1) et l'axe central est sensiblement parallèle aux plans (E1, E2) dans lesquels le bord de poussée (13) des sections d'aile (3a, 3b), (4a, 4b) est situé au moins dans la zone de la découpe (12) qui s'élargit et est de préférence perpendiculaire à la direction de transport (T).

9. Dispositif selon au moins l'une des revendications 1 à 8, **caractérisé en ce que** les éléments pousseurs (1a, 1b) opposés sont disposés respectivement sur deux moyens de transport (8) tournant autour de plusieurs axes (A1, A2), en particulier une chaîne de transport ou une bande transporteuse, et les axes de rotation (A1, A2) s'étendent de préférence essentiellement parallèlement aux plans (E1, E2) dans lesquels le bord de poussée de la première et de la deuxième section d'aile est disposé dans la zone de la découpe (12) et s'étend de préférence perpendiculairement à la direction de transport T.

10. Dispositif selon au moins l'une des revendications 1 à 9, **caractérisé en ce qu'**un élément pousseur (1a, 1b) présente plusieurs ailes périphériques (2a, 2b) ou
plusieurs éléments pousseurs (1a, 1b) sont disposés avec une aile respective (2a, 2b) sur le moyen de transport respectif en circulation (17).

11. Dispositif selon au moins l'une des revendications 1 à 102, **caractérisé en ce que** les éléments pousseurs (1a, 1b) sont fabriqués par impression 3D ou par moulage par injection.

12. Dispositif (10) selon au moins l'une des revendications 1 à 11, **caractérisé en ce que** l'élément pousseur est formé d'un matériau choisi dans le groupe suivant : matière plastique, métal, en particulier acier inoxydable.

13. Dispositif (10) selon au moins l'une des revendications 1 à 12, **caractérisé en ce que** ladite au moins une aile (2a, 2b) ne s'étend pas radialement depuis un support (7) qui tourne autour d'un axe.

14. Dispositif selon la revendication 1, **caractérisé en ce que** la distance se situe dans une plage ≥ à la dimension de l'épaisseur de l'aile de poussée + 0,1 mm et ≤ à la dimension de l'épaisseur de l'aile de poussée + 3 mm.

15. Dispositif selon la revendication 1 ou 14, **caractérisé en ce que** la distance est sensiblement constante.
